# EUROPEAN PATENT APPLICATION

(11) **EP 4 513 587 A1**
(43) Date of publication of application: **26.02.2025**
(21) Application number: 24174680.9
(22) Date of filing: 07.05.2024
(51) Int. Cl.: H01M 4/133, H01M 4/587, H01M 10/0525, H01M 4/36, H01M 4/62

(54) **NEGATIVE ELECTRODE FOR RECHARGEABLE LITHIUM BATTERY AND RECHARGEABLE LITHIUM BATTERY INCLUDING SAME**

(30) Priority: 21.08.2023 KR 20230109177
(71) Applicant: Samsung SDI Co., Ltd., Yongin-si, Gyeonggi-do 17084 (KR)
(72) Inventor: LEE, Jinihyon, 17084 Yongin-si (KR); KWON, Ilkyong, 17084 Yongin-si (KR); LEE, Donggeun, 17084 Yongin-si (KR); KWON, Seunguk, 17084 Yongin-si (KR); PYUN, Ahram, 17084 Yongin-si (KR); BANG, Youmin, 17084 Yongin-si (KR); CHOI, Jongsup, 17084 Yongin-si (KR); KIM, Seongdae, 17084 Yongin-si (KR)
(74) Representative: Marks & Clerk LLP

(57) **Abstract**

A negative electrode for a rechargeable lithium battery includes a current collector, and a dry negative active material layer on the current collector, the dry negative active material layer including a negative active material having a crystalline carbon core and a non-conductive layer coated on a surface of the crystalline carbon core, and a polytetrafluoroethylene binder.

## Description

### BACKGROUND

### 1. Field

Embodiments of this disclosure relate to a negative electrode for a rechargeable lithium battery and a rechargeable lithium battery including the same.

### 2. Description of the Related Art

Rechargeable lithium batteries exhibit excellent discharge voltage and high energy density. An electrode for the rechargeable lithium battery may be prepared by a wet process or a dry process, and among these, research is being conducted on the dry process, which is a simpler process and provides a higher capacity.

### SUMMARY

One or more embodiments provide a negative electrode for a rechargeable lithium battery, including a current collector, and a dry negative active material layer on the current collector, the dry negative active material layer including a negative active material having a crystalline carbon core and a non-conductive layer coated on a surface of the crystalline carbon core, and a polytetrafluoroethylene binder.

The non-conductive layer may include a non-conductive polymer selected from polyvinylidene fluoride, a polyvinylidene fluoride-hexafluoropropylene copolymer, or a combination thereof.

The polytetrafluoroethylene binder may include fibrillated polytetrafluoroethylene.

The non-conductive layer may have a thickness of about 1 nm to about 10 nm.

An amount of the non-conductive layer may be about 0.1 wt% to about 2.0 wt% based on 100 wt% of the negative active material.

An amount of the polytetrafluoroethylene binder may be about 0.5 wt% to about 3.0 wt% based on 100 wt% of the dry negative active material layer.

The negative active material may be prepared by coating a non-conductive polymer liquid, containing a non-conductive polymer in a solvent, on the crystalline carbon and drying it.

One or more embodiments provide a rechargeable lithium battery, including a positive electrode, a non-aqueous electrolyte, and a negative electrode including a current collector, and a dry negative active material layer on the current collector, the dry negative active material layer including a negative active material having a crystalline carbon core and a non-conductive layer coated on a surface of the crystalline carbon core, and a polytetrafluoroethylene binder.

The rechargeable lithium battery may have a height ratio of about 2:1 to about 20:1 of a peak related to polytetrafluoroethylene appearing at about 500 °C to about 600 °C and a peak related to a non-conductive polymer appearing at about 400 °C to about 500 °C when evolved gas analysis for the negative electrode is measured after formation charging and discharging the rechargeable lithium battery.

The rechargeable lithium battery may have a height ratio of about 5:1 to about 20:1 of a peak related to polytetrafluoroethylene appearing at about 500 °C to about 600 °C a peak related to a non-conductive polymer appearing at about 400 °C to about 500 °C when evolved gas analysis for the negative electrode is measured after formation charging and discharging the rechargeable lithium battery.

One or more embodiments provide a method of forming a negative electrode for a rechargeable lithium battery, including forming a current collector, and forming a dry negative active material layer on the current collector, the dry negative active material layer including a negative active material having a crystalline carbon core and a non-conductive layer coated on a surface of the crystalline carbon core, and a polytetrafluoroethylene binder.

Forming the negative active material may include adding a non-conductive polymer into a solvent to form a non-conductive polymer liquid, coating the non-conductive polymer liquid on the crystalline carbon core, and drying the non-conductive polymer liquid on the crystalline carbon core to form the negative active material.

At least some of the above and other features of the invention are set out in the claims.

### BRIEF DESCRIPTION OF THE DRAWINGS

Features will become apparent to those of skill in the art by describing in detail embodiments with reference to the attached drawings, in which:
FIG. 1 is a schematic diagram showing a rechargeable lithium battery according to one or more embodiments.
FIG. 2 is a graph showing thermogravimetric analysis and evolved gas analysis for the negative active material of Comparative Example 2 before conducting formation charging and discharging.
FIG. 3 is a graph showing thermogravimetric analysis and evolved gas analysis for the negative active material of Example 1 after conducting formation charging and discharging.
FIG. 4 is a graph showing thermogravimetric analysis and evolved gas analysis for the negative active material of Comparative Example 1 after conducting formation charging and discharging.
FIG. 5 is a graph showing thermogravimetric analysis and evolved gas analysis for the negative active material of Comparative Example 2 after conducting formation charging and discharging.
FIG. 6 is a graph showing charge and discharge characteristics of Example 1 and Comparative Examples 1 and 2.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" or "over" another layer or substrate, it can be directly on or over the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

Herein, expressions in the singular include expressions in plural unless the context clearly dictates otherwise. The term "combination thereof may include a mixture, a laminate, a complex, a copolymer, an alloy, a blend, a reactant of constituents. The terms "comprise", "include" or "have" are intended to designate that the performed characteristics, numbers, steps, constituted elements, or a combination thereof is present, but it should be understood that the possibility of presence or addition of one or more other characteristics, numbers, steps, constituted elements, or a combination are not to be precluded in advance.

In addition, herein, "layer" includes a shape totally formed on the entire surface or a shape partial surface, when viewed from a plane view.

Herein, "or" is not to be construed as an exclusive meaning, for example, "A or B" is construed to include A, B, A+B, and the like.

Unless otherwise defined in the specification, particle diameter or size may be an average particle diameter. An average particle diameter indicates an average particle diameter (D50) where a cumulative volume is about 50 volume% in a particle size distribution. The particle size (D50) may be measured by a method well known to those skilled in the art, e.g., by a particle size analyzer, by a transmission electron microscopic image, or a scanning electron microscopic image. Alternatively, a dynamic light-scattering measurement device may be used to perform a data analysis, and the number of particles is counted for each particle size range, and from this, the average particle diameter (D50) value may be easily obtained through a calculation.

According to example embodiments, a negative electrode for a rechargeable lithium battery includes a current collector and a dry negative active material layer on the current collector. The dry negative active material layer includes a negative active material having a crystalline carbon core and a non-conductive layer coated on a surface of the crystalline carbon core, and a polytetrafluoroethylene binder. Such a negative electrode refers to a negative electrode prepared by a dry process without using a solvent in the negative active material preparation, not a wet process.

In the negative active material according to one or more embodiments, the non-conductive layer coated on the crystalline carbon core may prevent a direct contact between the crystalline carbon core and the binder. This may inhibit the movement of electrons from the crystalline carbon core to the binder, so that the reduction in the initial efficiency (by reacting the electrons moved to the binder with lithium during charging and discharging to generate LiF, and reversibly consume lithium) may be effectively suppressed.

The effects due to the formation of the non-conductive layer may be realized if the crystalline carbon core is substantially completely covered by the non-conductive layer, and may not be obtained if the crystalline carbon core is only partially covered by the non-conductive layer or if the crystalline carbon is physically mixed with the polymer that makes up the non-conductive layer.

The non-conductive layer may include a polymer (e.g., a non-conductive polymer), e.g., polyvinylidene fluoride, a polyvinylidene fluoride-hexafluoropropylene copolymer, or a combination thereof.

In one or more embodiments, a thickness of the non-conductive layer may be about 1 nm to about 10 nm, e.g., about 2 nm to about 8 nm or about 3 nm to about 6 nm. If the thickness of the non-conductive layer is within the above range, the intercalation and deintercalation of lithium ions into the crystalline carbon may be well maintained and the electron movement from the crystalline carbon core to the binder may be more effectively suppressed.

In some embodiments, the thickness of the non-conductive layer may be measured by a SEM image or a TEM image, but it is limited thereto, and thus, it may be measured by any techniques as long as the thickness of the non-conductive layer is measured.

In one or more embodiments, an amount of the non-conductive layer may be about 0.1 wt% to about 2.0 wt%, e.g., about 0.2 wt% to about 1.5 wt% or about 0.3 wt% to about 0.9 wt%, based on 100 wt% of the negative active material. If the amount of the non-conductive layer is within the above range, the capacity of the negative electrode may not be decreased and the electron movement from the crystalline carbon core to the binder may be more effectively suppressed. For example, an amount of the non-conductive layer may be measured through thermogravimetric analysis (TGA).

The crystalline carbon may have any suitable shape. For example, the crystalline carbon may be of an unspecified shape or may be shaped as a sheet, a flake, a sphere, a fiber, e.g., a fiber shaped natural graphite or an artificial graphite, or a combination thereof.

In the negative electrode of one or more embodiments, the polytetrafluoroethylene binder may include a fibrillated polytetrafluoroethylene. The polytetrafluoroethylene binder may be converted to a fiber shape, e.g., fibrillated, if shear is applied, so that the binder is mixed with the negative active material and shear is applied thereto, thereby entangling the fibrillated binder and the negative active material to prepare a negative active material layer, enabling a preparation of a dry negative electrode.

An amount of the polytetrafluoroethylene binder may be about 0.5 wt% to about 3.0 wt%, e.g., about 0.6 wt% to about 2.6 wt% or about 0.8 wt% to about 2.4 wt%, based on a total 100 wt% of the dry negative active material layer. If the amount of the polytetrafluoroethylene binder is within the above range, the dry negative active material layer may be more effectively prepared.

The dry negative active material layer may optionally further include a conductive material. In the case of further including the conductive material in the dry negative active material layer, based on 100 wt% of the total dry negative active material layer, an amount of the negative active material may be about 94 wt% to about 99 wt%, e.g., about 96 wt% to about 99 wt%, an amount of the binder may be about 0.5 wt% to about 3 wt%, e.g., about 0.5 wt% to about 2 wt%, and an amount of the conductive material may be about 0.5 wt% to about 3 wt%, e.g., about 0.5 wt%, to about 2 wt%.

The conductive material may be included to provide electrode conductivity, and any electrically conductive material may be used as a conductive material unless it causes a chemical change. Examples of the conductive material may include a carbon-based material, e.g., natural graphite, artificial graphite, carbon black, acetylene black, ketjen black, a carbon fiber, and the like; a metal-based material of a metal powder or a metal fiber including, e.g., copper, nickel, aluminium, silver, and the like; a conductive polymer, e.g., a polyphenylene derivative; or a mixture thereof. The carbon black may be, e.g., acetylene black, ketjen black, channel black, furnace black, lamp black, thermal black, or a combination thereof.

The current collector may include one selected from, e.g., a copper foil, a nickel foil, a stainless steel foil, a titanium foil, a nickel foam, a copper foam, a polymer substrate coated with a conductive metal, and a combination thereof.

### <Preparation of negative electrode>

In the negative electrode according to one or more embodiments, a negative active material may be first prepared.

The negative active material may be prepared by adding a non-conductive polymer into a solvent to prepare a non-conductive polymer liquid, and coating the non-conductive polymer liquid on a crystalline carbon. As such, the crystalline carbon is coated with the non-conductive polymer liquid, so that the non-conductive layer may be presented in order to substantially, completely, and continuously surround the surface of the crystalline carbon in a form of a layer, and resultantly, the surface of the crystalline carbon is not exposed to the outside.

The non-conductive polymer may be, e.g., polyvinylidene fluoride, a polyvinylidene fluoride-hexafluoropropylene copolymer, or a combination thereof. The solvent may be water or an organic solvent, and the organic solvent may be, e.g., N-methyl pyrrolidone, or the like. However, the solvent may be any suitable solvent, as long as it may dissolve the non-conductive polymer.

In the non-conductive polymer liquid, an amount of solid may be about 0.5 wt% to about 10.0 wt%, e.g., about 1.0 wt% to about 8.0 wt% or about 4.0 wt% to about 6.0 wt%, based on 100 wt% of the non-conductive polymer liquid.

The coating process may be performed by liquid coating processes, e.g., an immersion process, a spray process, or the like.

The negative active material prepared by the above procedure and a polytetrafluoroethylene binder, and optionally a conductive material, are dry mixed. The resultant mixture is extruded to prepare a negative active material layer. The dry mixing refers to a process that does not use a solvent. The dry mixing may be performed at a speed of about 1000 rpm to about 10000 rpm, e.g., about 1500 rpm to about 8000 rpm or about 2000 rpm to about 7000 rpm, and may be performed for about 1 minute to about 30 minutes. In the dry mixing, the polytetrafluoroethylene binder may be fibrillated.

The negative active material layer may be a sheet-type and may be a self-standing film. The negative active material layer may be adhered to (e.g., coated on) a current collector, thereby preparing the negative electrode. The adhering process may be, e.g., a laminate process.

### <Rechargeable lithium battery>

A rechargeable lithium battery includes the negative electrode, a positive electrode, and a non-aqueous electrolyte. In one or more embodiments, after the rechargeable lithium battery is formation charged and discharged, if an evolved gas analysis (EGA) for the negative electrode is measured, a height ratio of a peak related to polytetrafluoroethylene appearing at about 500 °C to about 600 °C and a peak related to a non-conductive polymer appearing at about 400 °C to about 500 °C may be about 2:1 to about 20:1, e.g., about 5:1 to about 20:1 or about 8:1 to about 15:1. After the formation charging and discharging, if the measurement results of the EGA for the negative electrode meet the above conditions, it indicates that the polytetrafluoroethylene does not react with lithium ions and remains in the negative active material layer even after formation charging and discharging. From these results, it may be understood that the non-conductive layer coated on the surface of the crystalline carbon core may prevent or substantially minimize transfer of lithium ions from the crystalline carbon core to the polytetrafluoroethylene binder, and thus, the reaction between polytetrafluoroethylene and lithium may be suppressed.

If the non-conductive layer is not presented on the surface of the crystalline carbon core, during the formation charging and discharging, ions may be transferred from the crystalline carbon core to the polytetrafluoroethylene binder, which resultantly react with the lithium ions to form LiF, thereby reducing the polytetrafluoroethylene. In this case, if EGA for the negative electrode is performed, the height ratio of the peaks may be about 1:1.

The formation charge and discharge may be performed by charging and discharging at about 0.1 C to about 1 C once to three cycles.

### <Positive electrode>

The positive electrode may include a current collector and a positive active material layer formed on the current collector. The positive active material may include lithiated intercalation compounds that reversibly intercalate and deintercalate lithium ions. In other embodiments, one or more composite oxides of a metal selected from, e.g., cobalt, manganese, nickel, and a combination thereof, and lithium may be used. In some embodiments, the compounds represented by one of the following chemical formulae may be used: LiₐA_{1-b}X_{b}D¹₂ (0.90≤a≤1.8, 0≤b≤0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤c1≤0.05); LiₐE_{2-b}X_{b}O_{4-c1}D¹_{c1} (0.90≤a≤1.8, 0≤b≤0.5, 0≤c1≤0.05); LiₐNi_{1-b-c}Co_{b}X_{c}D¹_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α<2); LiₐNi_{1-b-c}CobX_{c}O_{2-α}T₂ (0.90≤a≤1.8, 0≤b≤0.5, 0≤c≤0.5, 0<α<2); LiₐNi_{1-b-c}Mn_{b}XD¹_{c}, (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1) LiₐCoG_{b}O₂ (0.90≤a≤1.8, 0.001≤b≤0.1); LiₐMm_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li_{(3-f)}Fe₂(PO₄)₃ (0≤f≤2); LiₐFePO₄ (0.90≤a≤1.8)

In the above chemical formulas, A is selected from Ni, Co, Mn, or a combination thereof; X is selected from Al, Ni, Co, Mn, Cr, Fe, Mg, Sr, V, a rare earth element, or a combination thereof; D¹ is selected from O, F, S, P, or a combination thereof; E is selected from Co, Mn, or a combination thereof; T is selected from F, S, P, or a combination thereof; G is selected from Al, Cr, Mn, Fe, Mg, La, Ce, Sr, V, or a combination thereof; Q is selected from Ti, Mo, Mn, or a combination thereof; Z is selected from Cr, V, Fe, Sc, Y, or a combination thereof; J is selected from V, Cr, Mn, Co, Ni, Cu, or a combination thereof; and L¹ is selected from Mn, Al, or a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, or a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or mixtures thereof. The coating layer may be disposed in a method having no adverse influence on properties of a positive active material by using these elements in the compound. For example, the method may include any coating method, e.g., spray coating, dipping, and the like, but is not illustrated in more detail since it is well-known in the related field.

In the positive electrode, an amount of the positive active material may be about 90 wt% to about 98 wt% based on the total weight of the positive active material layer.

In some embodiments, the positive active material layer may further include a binder and a conductive material. The binder and the conductive material may be included in an amount of about 1 wt% to about 5 wt%, respectively, based on the total amount of the positive active material layer.

The binder improves binding properties of positive active material particles with one another and with a current collector. Examples thereof may be polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like.

The conductive material is included to provide electrode conductivity. Any electrically conductive material may be used as a conductive material unless it causes a chemical change. Examples of the conductive material may include a carbon-based material, e.g., natural graphite, artificial graphite, carbon black, acetylene black, ketjen black, carbon fiber, and the like; a metal-based material of a metal powder or a metal fiber including, e.g., copper, nickel, aluminium, silver, and the like; a conductive polymer, e.g., polyphenylene derivatives; or mixtures thereof.

The current collector may include, e.g., Al.

The positive electrode may be prepared by mixing a positive active material, a binder, and a conductive material in a solvent to prepare a positive active material composition and coating the active material composition on a current collector. The solvent may be, e.g., N-methyl pyrrolidone.

### <Electrolyte>

The electrolyte may include a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent. The carbonate-based solvent may include, e.g., dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include, e.g., methyl acetate, ethyl acetate, n-propyl acetate, dimethyl acetate, methyl propionate, ethyl propionate, propyl propionate, γ-butyrolactone, decanolide, valerolactone, mevalonolactone, caprolactone, and the like. The ether-based solvent may include, e.g., dibutyl ether, tetraglyme, diglyme, dimethoxyethane, 2-methyltetrahydrofuran, 2,5-dimethyltetrahydrofuran, tetrahydrofuran, and the like. The ketone-based solvent may include, e.g., cyclohexanone, and the like. The alcohol-based solvent may include, e.g., ethyl alcohol, isopropyl alcohol, and the like. The aprotic solvent may include, e.g., nitriles, e.g., R-CN (where R is a C2 to C20 linear, branched, or cyclic hydrocarbon, and may include a double bond, an aromatic ring, or an ether bond), amides, e.g., dimethylformamide, dioxolanes, e.g., 1,3-dioxolane, 1,4-dioxolane, and the like, sulfolanes, and the like.

The non-aqueous organic solvent may include phosphorous-based solvent, e.g., trimethyl phosphate, triethyl phosphate, triphenyl phosphate, tris(2,2,2-trifluoroethyl)phosphate, tris(2,2,2-trifluoroethyl)phosphite or a combination thereof, and may include sulfones, e.g., dimethyl sulfone, ethylmethyl sulfone, or a combination thereof.

The non-aqueous organic solvent may be used alone or in a mixture. If the non-aqueous organic solvent is used in a mixture, the mixture ratio may be controlled in accordance with a desirable battery performance and it may be well known to one in the related art.

If the non-aqueous organic solvent is mixed and used, a mixed solvent of a cyclic carbonate and a chain carbonate, a mixed solvent of a cyclic carbonate and a propionate-based solvent, or a mixed solvent of a cyclic carbonate, a chain carbonate, and a propionate-based solvent may be used. The propionate-based solvent may be, e.g., methylpropionate, ethylpropionate, propylpropionate, or a combination thereof.

Herein, if the cyclic carbonate and the chain carbonate or the cyclic carbonate and the propionate-based solvent are mixed, they may be mixed in a volume ratio of about 1:1 to about 1:9, and thus, performance of the electrolyte may be improved. In addition, if the cyclic carbonate, the chain carbonate, and the propionate-based solvent are mixed, they may be mixed in a volume ratio of about 1:1:1 to about 3:3:4. The mixing ratios of the solvents may be appropriately adjusted according to desirable properties.

The organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

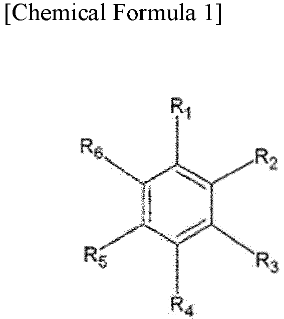

In Chemical Formula 1, R₁ to R₆ are the same or different and are selected from hydrogen, a halogen, a C1 to C10 alkyl group, a haloalkyl group (e.g. a C1 to C10 haloalkyl group), and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte may further include vinylethylene carbonate, vinylene carbonate or an ethylene carbonate-based compound represented by Chemical Formula 2, as an additive for improving cycle life.

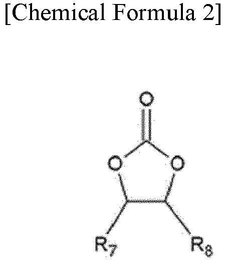

In Chemical Formula 2, R₇ and R₈ are the same or different and may each independently be hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or the like. In the case of further using the additive for improving cycle life, an amount of the additive may be suitably controlled within an appropriate range.

The lithium salt dissolved in an organic solvent supplies a battery with lithium ions, basically operates the rechargeable lithium battery, and improves transportation of the lithium ions between positive and negative electrodes. Examples of the lithium salt may include at least one or two supporting salts selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, e.g., an integer of about 1 to about 20, lithium difluoro(bisoxalato) phosphate), LiCl, LiI, LiB(C₂O₄)₂ (lithium bis(oxalato) borate: LiBOB), or lithium difluoro(oxalato)borate (LiDFOB). A concentration of the lithium salt may range from about 0.1 M to about 2.0 M. If the lithium salt is included at the above concentration range, an electrolyte may have excellent performance and lithium ion mobility due to optimal electrolyte conductivity and viscosity.

A separator may be disposed between the positive electrode and the negative electrode depending on a type of a rechargeable lithium battery. For example, the separator may use polyethylene, polypropylene, polyvinylidene fluoride or multi-layers thereof having two or more layers and may be a mixed multilayer, e.g., a polyethylene/polypropylene double-layered separator, a polyethylene/polypropylene/polyethylene triple-layered separator, a polypropylene/polyethylene/polypropylene triple-layered separator, and the like.

The separator may include a porous substrate and a ceramic-included coating layer positioned on at least one surface of the porous substrate. The ceramic may include, e.g., SiO₂, Al₂O₃, Al(OH)₃, AlO(OH), TiO₂, BaTiO₂, ZnO₂, Mg(OH)₂, MgO, Ti(OH)₄, ZrO₂, aluminium nitride, silicon carbide, boron nitride, or a combination thereof.

According to another embodiment, the separator may be a composite porous separator including a porous substrate and a functional layer on the porous substrate. The functional layer may have additional functions, e.g., may be at least one of a heat-resistant layer and an adhesive layer. The heat-resistant layer may include a heat-resistant resin and optionally a filler. The adhesive layer may include an adhesive resin and optionally a filler. The filler may be an organic filler, an inorganic filler, or combinations thereof. The heat-resistant resin and the adhesive resin may be any materials which may be used in the separator in the related art.

The rechargeable lithium battery may be classified into, e.g., a lithium ion battery, a lithium ion polymer battery, or a lithium polymer battery depending on the types of the separator and the electrolyte. The rechargeable lithium battery may also be classified into, e.g., cylindrical, prismatic, coin-type, or pouch-type battery, depending on the shape, and may be classified into a bulk type battery or a thin film type battery depending on its size.

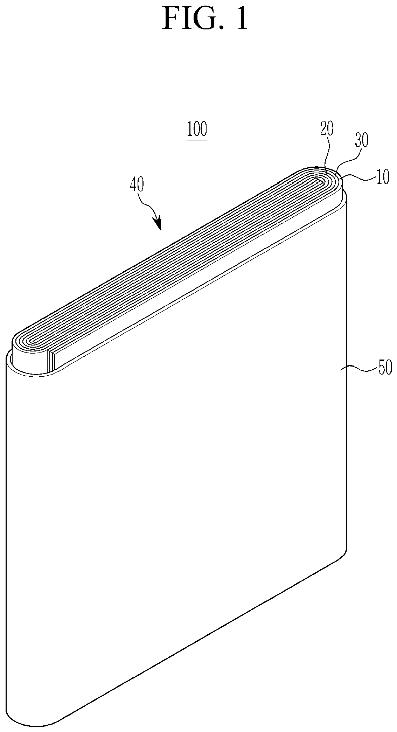

FIG. 1 is an exploded perspective view of a rechargeable lithium battery according to an embodiment. For example, as illustrated in FIG. 1, the rechargeable lithium battery according to one or more embodiments may be a prismatic battery. In another example, the rechargeable lithium battery according to one or more embodiments may include variously-shaped batteries, e.g., a cylindrical battery, a pouch battery, and the like.

Referring to FIG. 1, a rechargeable lithium battery 100 according to one or more embodiments may include an electrode assembly 40 manufactured by winding a separator 30 disposed between a positive electrode 10 and a negative electrode 20, and a case 50 housing the electrode assembly 40. An electrolyte may be impregnated in the positive electrode 10, the negative electrode 20, and the separator 30.

Hereinafter, Examples and Comparative Examples are described. The following Examples and Comparative Examples are provided in order to highlight characteristics of one or more embodiments, but it will be understood that the Examples and Comparative Examples are not to be construed as limiting the scope of the embodiments. Further, it will be understood that the embodiments are not limited to the particular details described in the Examples and Comparative Examples.

### (Example 1)

Polyvinylidene fluoride was added to an N-methyl pyrrolidone solvent to prepare a non-conductive polymer liquid with 3.0 wt% of a solid amount.

Artificial graphite was immersed in the non-conductive polymer liquid and dried to prepare a negative active material, in which a non-conductive layer was totally (e.g., completely) coating the entire surface of the artificial graphite. Herein, a weight ratio of the artificial graphite and the non-conductive polymer was 99.2:0.8 and a thickness of the non-conductive layer was 3.0 nm.

98.8 wt% of the negative active material and 1.2 wt% of polytetrafluoroethylene were dry mixed at a speed of 5000 rpm for 10 minutes. The mixture was extruded to prepare a sheet-type and self-standing negative active material layer. The negative active material layer was laminated on a copper foil current collector, thereby preparing a negative electrode.

Using the negative electrode, a lithium metal counter electrode, and an electrolyte, a half-cell was fabricated. The electrolyte was made by adding fluoroethylene carbonate to a mixed solvent in which 1 M LiPF₆ was dissolved in ethylene carbonate, ethylmethyl carbonate, and dimethyl carbonate (2:1:7 volume ratio) and the added amount of fluoroethylene carbonate was 3.5 wt% based on the total weight of the mixed solvent.

### (Example 2)

A negative electrode and a half-cell were fabricated by the same procedure as in Example 1, except that a weight ratio of the artificial graphite and the non-conductive polymer was changed to 99.5:0.5 to prepare a negative active material in which the non-conductive layer with a thickness of 2.8 nm was formed.

### (Example 3)

A negative electrode and a half-cell were fabricated by the same procedure as in Example 1, except that a weight ratio of the artificial graphite and the non-conductive polymer was changed to 99.0: 1.0 to prepare a negative active material in which the non-conductive layer with a thickness of 3.5 nm was formed.

### (Example 4)

A negative electrode and a half-cell were fabricated by the same procedure as in Example 1, except that a weight ratio of the artificial graphite and the non-conductive polymer was changed to 98.0:2.0 to prepare a negative active material in which the non-conductive layer with a thickness of 10 nm was formed.

### (Comparative Example 1)

98.8 wt% of an artificial graphite negative active material and 1.2 wt% of polytetrafluoroethylene were dry mixed at a speed of 5000 rpm for 10 minutes and the mixture was extruded to prepare a sheet-type and self-standing negative active material layer. The negative active material layer was laminated on a copper foil current collector, thereby preparing a negative electrode.

Using the negative electrode, a lithium metal counter electrode, and an electrolyte, a half-cell was fabricated. The electrolyte was made by adding fluoroethylene carbonate to a mixed solvent in which 1 M LiPF₆ was dissolved in ethylene carbonate, ethylmethyl carbonate, and dimethyl carbonate (2:1:7 volume ratio) and the adding amount of fluoroethylene carbonate was 3.5 wt% based on the total weight of the mixed solvent.

### (Comparative Example 2)

98.0 wt% of an artificial graphite negative active material, 0.8 wt% of polyvinylidene fluoride, and 1.2 wt% of polytetrafluoroethylene were dry mixed at a speed of 5000 rpm for 10 minutes and the mixture was extruded to prepare a sheet-type and self-standing negative active material layer. The negative active material layer was laminated onto a copper foil current collector, thereby preparing a negative electrode.

Using the negative electrode, a lithium metal counter electrode, and an electrolyte, a half-cell was fabricated. The electrolyte was made by adding fluoroethylene carbonate to a mixed solvent in which 1 M LiPF₆ was dissolved in ethylene carbonate, ethylmethyl carbonate, and diethyl carbonate (2:1:7 volume ratio) and the adding amount of fluoroethylene carbonate was 3.5 wt% based on the total weight of the mixed solvent.

### (Comparative Example 3)

Instead of polytetrafluoroethylene, polyvinylidene fluoride was used in the negative electrode preparation according to Comparative Example 1. A negative electrode would not be prepared.

### (Comparative Example 4)

98.8 wt% of an artificial graphite negative active material and 1.2 wt% of polytetrafluoroethylene were mixed in an N-methyl pyrrolidone solvent to prepare a negative active material layer slurry. The negative active material layer slurry was coated on a copper foil current collector, dried, and pressurized. A negative electrode could not be prepared.

### Experimental Example 1: Evaluation of thermal stability

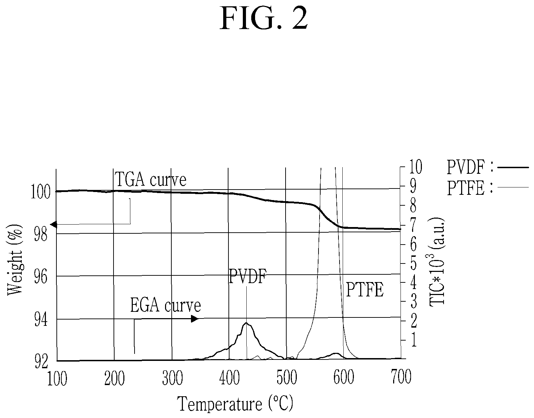

Thermogravimetric analysis (TGA) and evolved gas analysis (EGA) of the negative active material layer according to Comparative Example 2 were measured. The results are shown in FIG. 2.

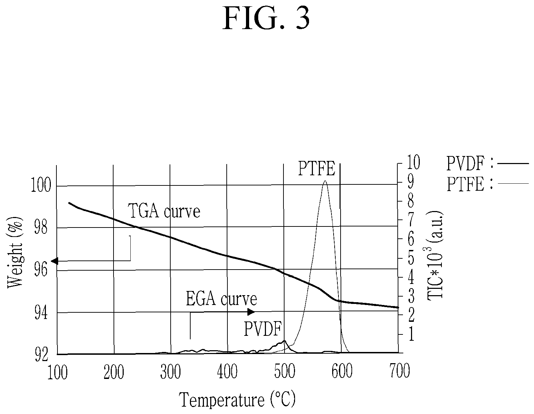

The half-cells according to Examples 1 to 4 and Comparative Examples 1 and 2 were formation charged and discharged at 0.1 C once. The negative active material was separated and obtained from the formation charged and discharged cell and then TGA and EGA for the negative active material were measured. Among these results, the results of Example 1 and Comparative Examples 1 and 2 are shown in FIG. 3 to FIG. 5, respectively.

The TGA was performed under an argon atmosphere and was carried out by increasing the temperature from a room temperature (i.e., ambient temperature) of 25 °C to 1000 °C at an increasing rate of 10 °C/min to measure heat weight loss. The EGA was performed under an argon atmosphere and was performed by increasing from a room temperature of 25 °C to 1000 °C at an increasing rate of 10 °C/min using an EGA-MS (Evolved Gas Analysis-Mass Spectroscopy) to measure molecular weight of the released gas.

As shown in FIG. 3, even though the formation charging and discharging was performed, the negative active material of Example 1 exhibited a large peak related to polytetrafluoroethylene (PTFE) at 500 °C to 600 °C, similar to FIG. 2. The ratio of a height of a peak appearing at 500 °C to 600 °C related to polytetrafluoroethylene relative to a height of a peak related to polyvinylidene fluoride appearing at 400 °C to 500 °C was approximately 10:1. From these results, it can be seen that if polyvinylidene fluoride is substantially and completely coated on the surface of artificial graphite, polytetrafluoroethylene may be maintained, and thus, the consumption of polytetrafluoroethylene due to its reaction with lithium may be suppressed.

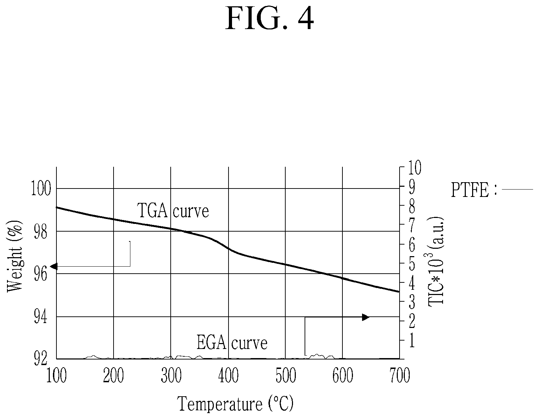

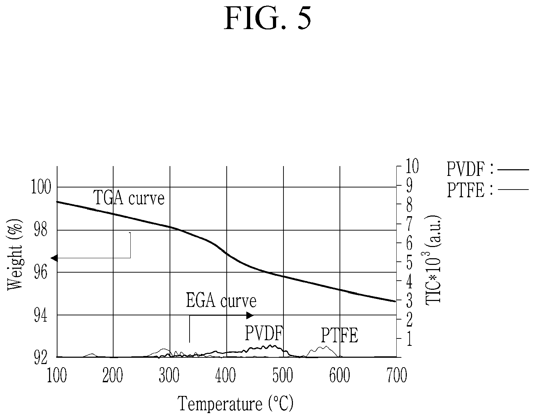

Whereas, as shown in FIG. 5, Comparative Example 2 (in which polytetrafluoroethylene and polyvinylidene fluoride were physically mixed with the negative active material) exhibited a surprisingly small peak related to polytetrafluoroethylene which was different from FIG. 2 (results before formation charging and discharging). The peak related to polytetrafluoroethylene shown in FIG. 5 was similar to FIG. 4 (which showed Comparative Example 1 only using polytetrafluoroethylene, after the formation charging and discharging). From these results, it can be seen that if polyvinylidene fluoride is physically mixed with polytetrafluoroethylene, the reaction of polytetrafluoroethylene with lithium during charging and discharging may not be suppressed.

### Experimental Example 2: Evaluation of initial efficiency

The half-cells according to Examples 1 to 4 and Comparative Examples 1 and 2 were charged and discharged at 0.1 C once. The charge capacity and discharge capacity were measured, and from these results, initial efficiency (percentage of discharge capacity/charge capacity) was calculated. The results are shown in Table 1.

**(Table 1)**

| | Charge capacity (mAh/g) | Discharge capacity (mAh/g) | Initial efficiency (%) |
|---|---|---|---|
| Example 1 | 377.4 | 348.6 | 92.4 |
| Example 2 | 376.5 | 346.2 | 92.0 |
| Example 3 | 375.3 | 347.2 | 92.5 |
| Example 4 | 378.3 | 348.2 | 92.0 |
| Comparative Example 1 | 393.4 | 347.8 | 88.4 |
| Comparative Example 2 | 392.2 | 347.4 | 88.6 |

As shown in Table 1, Examples 1 to 4 including the negative active material in which the surface of artificial graphite was coated with the polyvinylidene fluoride non-conductive layer, exhibited suitable charge capacity and discharge capacity. Examples 1 to 4 exhibited superior initial efficiency (i.e., above 92%) to Comparative Example 1 only using polytetrafluoroethylene (i.e., without a polyvinylidene fluoride non-conductive layer) and Comparative Example 2 using a mixture of polyvinylidene fluoride and polytetrafluoroethylene (i.e., both showed initial efficiency below 89%).

### Experimental Example 3: Evaluation of charge and discharge characteristics

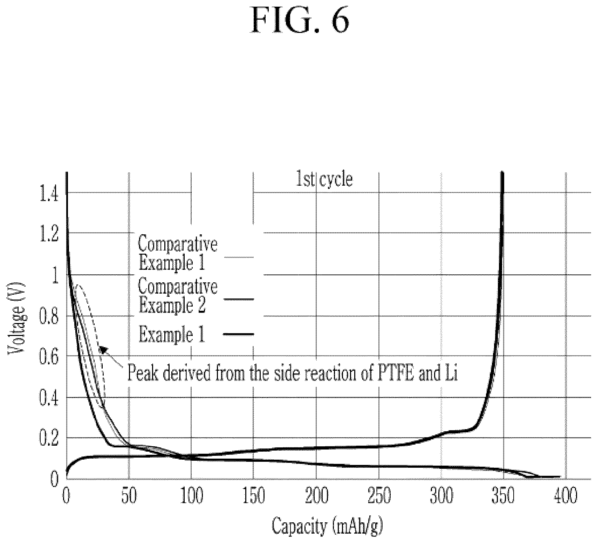

The half-cells according to Examples 1 to 4 and Comparative Examples 1 and 2 were charged and discharged at 0.1 C once to evaluate charge and discharge characteristics. The results of Example 1 and Comparative Examples 1 and 2 are shown in FIG. 6.

As shown in FIG. 6, Example 1 exhibited no peak due to the side reaction between polytetrafluoroethylene and lithium. However, Comparative Examples 1 and 2 exhibited peak due to the side reaction.

By way of summation and review, one or more embodiments provide a negative electrode for a rechargeable lithium battery exhibiting excellent initial efficiency and electrochemical characteristics. Another embodiment provides a rechargeable lithium battery including the negative electrode.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A negative electrode for a rechargeable lithium battery, the negative electrode comprising:
a current collector; and
a dry negative active material layer on the current collector, the dry negative active material layer including a negative active material having a crystalline carbon core and a non-conductive layer coated on a surface of the crystalline carbon core, and a polytetrafluoroethylene binder.

2. The negative electrode for a rechargeable lithium battery as claimed in claim 1, wherein the non-conductive layer includes a non-conductive polymer selected from polyvinylidene fluoride, a polyvinylidene fluoride-hexafluoropropylene copolymer, or a combination thereof.

3. The negative electrode for a rechargeable lithium battery as claimed in claim 1 or claim 2, wherein the polytetrafluoroethylene binder includes fibrillated polytetrafluoroethylene.

4. The negative electrode for a rechargeable lithium battery as claimed in any one of claims 1 to 3, wherein the non-conductive layer has a thickness of about 1 nm to about 10 nm.

5. The negative electrode for a rechargeable lithium battery as claimed in any one of claims 1 to 4, wherein an amount of the non-conductive layer is about 0.1 wt% to about 2.0 wt% based on 100 wt% of the negative active material.

6. The negative electrode for a rechargeable lithium battery as claimed in any one of claims 1 to 5, wherein an amount of the polytetrafluoroethylene binder is about 0.5 wt% to about 3.0 wt% based on 100 wt% of the dry negative active material layer.

7. The negative electrode for a rechargeable lithium battery as claimed in any one of claims 1 to 6, wherein the negative active material is prepared by coating a non-conductive polymer liquid, containing a non-conductive polymer in a solvent, on the crystalline carbon and drying it.

8. A rechargeable lithium battery, comprising:
the negative electrode of any one of claims 1 to 7;
a positive electrode; and
a non-aqueous electrolyte.

9. The rechargeable lithium battery as claimed in claim 8, wherein the rechargeable lithium battery has a height ratio of about 2:1 to about 20:1 of a peak related to polytetrafluoroethylene appearing at about 500 °C to about 600 °C and a peak related to a non-conductive polymer appearing at about 400 °C to about 500 °C when evolved gas analysis for the negative electrode is measured after formation charging and discharging the rechargeable lithium battery.

10. The rechargeable lithium battery as claimed in claim 8, wherein the rechargeable lithium battery has a height ratio of about 5:1 to about 20:1 of a peak related to polytetrafluoroethylene appearing at about 500 °C to about 600 °C a peak related to a non-conductive polymer appearing at about 400 °C to about 500 °C when evolved gas analysis for the negative electrode is measured after formation charging and discharging the rechargeable lithium battery.

11. A method of forming a negative electrode for a rechargeable lithium battery, the method comprising:
forming a current collector; and
forming a dry negative active material layer on the current collector, the dry negative active material layer including a negative active material having a crystalline carbon core and a non-conductive layer coated on a surface of the crystalline carbon core, and a polytetrafluoroethylene binder.

12. The method as claimed in claim 11, wherein forming the negative active material includes:
adding a non-conductive polymer into a solvent to form a non-conductive polymer liquid;
coating the non-conductive polymer liquid on the crystalline carbon core; and
drying the non-conductive polymer liquid on the crystalline carbon core to form the negative active material.
